# EUROPEAN PATENT SPECIFICATION

(11) **EP 4 435 379 B1**
(45) Date of publication and mention of the grant of the patent: **03.09.2025**
(21) Application number: 24165352.6
(22) Date of filing: 21.03.2024
(51) Int. Cl.: G01B 21/26, G01B 5/00

(54) **A BRACKET FOR CONTROL INSTRUMENTS OF THE ALIGNMENT OF WHEELS OF VEHICLES**
HALTERUNG FÜR STEUERINSTRUMENTE ZUR AUSRICHTUNG VON FAHRZEUGRÄDERN
SUPPORT POUR INSTRUMENTS DE COMMANDE DE L'ALIGNEMENT DE ROUES DE VÉHICULES

(30) Priority: 23.03.2023 IT 202300005511
(43) Date of publication of application: 25.09.2024
(73) Proprietor: Ferrari, Gino, 42015 Correggio (RE) (IT); Maioli, Franco, 43015 Correggio (RE) (IT)
(72) Inventor: Ferrari, Gino, 42015 Correggio (RE) (IT); Maioli, Franco, 43015 Correggio (RE) (IT)
(74) Representative: Feltrinelli, Secondo Andrea

(56) References cited:
- US-A- 6 131 293
- US-A1- 2018 347 974

## Description

### Field of the invention

The invention concerns a bracket for control instruments of the alignment of wheels of vehicles, generally usable to quickly assemble and disassemble measurement and control instruments, without damaging the rims of the wheels and maintaining high precision in measurements.

### Background of the invention

It is known that, in order to verify the alignment of the wheels of vehicles, operators use specific measuring instruments which can be removably mounted on brackets which can be attached, also removably, on each wheel.

US 2018/0347974 A1 discloses a bracket for supporting a measuring instrument of a vehicle wheel alignment system.

A known bracket comprises a flat central body which, on a face which faces the outside of the vehicle when it is mounted on the wheel, is equipped with a central attachment, typically consisting of a substantially horizontal hub protruding cantilevered, on which the measurement and control instruments can be engaged.

The central body is typically made in the form of a triangular or star-shaped metal flange, and comprises three radial arms which are normally disposed angularly with respect to each other at 120°.

Each arm is equipped with its own spike facing the tire of a wheel, shaped so as to go over the tread and engage gripping in the grooves thereof.

All the spikes are mounted sliding with respect to the respective arms, so that they can adapt to the various diameters of the wheels and tires on which the brackets have to have a temporary but stable grip in order to carry out the checks and any adjustments to correct alignment defects.

For this purpose, the spikes have the respective distal ends bent into an "L" shape so as to all together encompass, in the configuration of use of the brackets, the external circumference of the wheel's tire.

Each end of the spikes is also provided with a specific contact member which, as mentioned, is intended to engage in the grooves of the tread of the tires, and which consists of a gripping fastener whose external surface comprises a series of raised teeth which can be coupled to the grooves in order to guarantee their grip.

The spikes are mounted sliding along the respective arms and are driven simultaneously with translational motion to converge with or diverge from each other, with respect to the center of the central body and to tighten, or widen, on the external surfaces of the tires to be gripped.

In order to drive the spikes simultaneously, a first system of articulated connecting rods is mounted on the central body, which are interposed between a central command disk and the spikes.

The central command disk is coaxial to the hub on which the instruments are mounted and can be driven in positive or negative rotation with respect to the central body by means of special knobs that can be driven manually by the operators and are mechanically coupled to a movement transmission toothing provided between them and the central disk.

Therefore, by rotating the knobs in one or the opposite direction, a simultaneous movement is imparted to all the connecting rods which in turn transmit it to the spikes, making them slide in centrifugal or centripetal directions along the respective arms in the radial directions, guided by guide members, normally rectilinear grooves, provided for this purpose on the very arms.

The precision of the checks and any corrective adjustments of the alignment of the wheels of a vehicle require that the support apparatuses are mounted in a perfectly centered position with respect to the axes of rotation of the wheels, therefore, in other words, that the central hubs are coaxial to the latter.

A precise positioning of these support apparatuses on the wheels is therefore essential to obtain precise measurements and equally precise corrections, and it is normally entrusted to the experience and manual skills of the operators, who also need to carry out all the assembly, disassembly and measurement operations, avoiding accidentally damaging the rims of the wheels in any way, some of which are typically of a very delicate and expensive type.

To solve this additional problem of safeguarding the integrity of the rims, the arms are specifically equipped with respective stoppers made of shockproof material, for example elastic/rubber, which perform the function of elements for resting the bracket at a distance on the shoulder of a wheel's tire, during assembly and use, in such a way that the central metal body of the bracket cannot come into contact with the rim, but remains far enough away from it to guarantee its safeguarding during the work steps. These stoppers are also mobile in radial directions and simultaneously along the arms of the brackets, in some cases independently from the spikes, in other cases simultaneously with them, so that they can be adapted and positioned resting on the shoulders of tires of various diameters.

In detail, these stoppers are driven, like the spikes, by a specific second movement system which comprises a second disc, supported on the central rotating body and coaxial to the one that drives the spikes, equipped with an angular graduation.

Respective connecting rods are also provided between the stoppers and the second disk, which are intended to transmit the radial movements imparted by a second knob which, driven by the operators, drives the second disk into angular rotation.

In correspondence with pre-selected angular values, which correspond to the widths of the diameters of the rims and tires of wheels available on the market, normally expressed in inches, a temporary clamping system is provided which snap-fixes the position of both the spikes and also of the stoppers on each selected diameter, so that the bracket, during use, is secured and substantially monolithic with the wheel.

This state of the art presents some problems.

A first problem is that the shoulders of some types of tires, despite having smooth surfaces, are equipped with inscriptions of various kinds, such as for example the brand and/or logo of the manufacturer, the characteristic measurements of the tire, its intended use, which protrude embossed by a few millimeters from the surface of the shoulder, and it often happens that the contact zones of the rest stoppers of the brackets on the shoulders partly or totally correspond to the position of the embossed inscriptions.

This causes the stoppers to rest imprecisely and, consequently, an imperfect skewed positioning of the brackets with respect to the plane on which the wheels rest, especially when only a part of the stoppers rest on the embossed inscriptions while the other parts rest correctly on the smooth surfaces of the shoulders.

It has been verified that this skewed resting of the brackets of the instruments, however limited it may be, nevertheless affects the precision of the instruments' measurement data, resulting in errors with the indication of the wheel alignment, the extent of which cannot be determined and, therefore, corrected.

Consequently, to overcome these faulty wheel alignment measurements detected by the instruments mounted on the brackets, the operators, in order to restore the optimal wheel positions provided by the vehicle manufacturers, are led to carry out adjustments which are sometimes not even necessary, or in any case affected by errors, even if apparently corrective of the defects mistakenly detected by the instruments.

Another problem of known brackets is that the adjustment of the radial positions for adapting the stoppers to the diameters of the tires on the shoulders of which they have to rest occurs with pre-set angular rotations of the second central disk, that is, according to convergent or divergent movements and fixed in pre-selectable positions, corresponding to the standardized diameters of the wheels currently available on the market.

This type of adjustment can cause the stoppers to rest on the shoulders of the tires precisely in the zones where the embossed inscriptions are present, with the previously-described consequences for the precision of the measurements and any corrections to the wheel alignment.

One purpose of the invention is to improve the state of the art.

Another purpose of the invention is to provide a bracket for control instruments of the alignment of wheels of vehicles, which allows operators to position the instruments in a substantially perfect manner with respect to the axes of rotation of the wheels, obtaining precise measurements and allowing to perform adequate adjustments free of errors, and only if actually necessary.

Another purpose of the invention is to provide a bracket for control instruments of the alignment of wheels of vehicles that is simple to position, relatively economical and easy to use.

According to one aspect of the invention, there is provided a bracket for control instruments of the alignment of wheels of vehicles in accordance with the characteristics of claim 1.

Other characteristics are specified in the dependent claims.

The bracket for control instruments of the alignment of wheels of vehicles therefore allows to:
- position the instruments on the wheels perfectly centered with respect to their axes of rotation, and carry out measurements and adjustments without inaccuracies;
- protect the rims of the wheels during the steps of assembly, use and disassembly of the brackets, regardless of the types of tires mounted.

### Brief description of the drawings

Other characteristics and advantages of the invention will become more apparent from the detailed description of a preferred but not exclusive embodiment of a bracket for control instruments of the alignment of wheels of vehicles, shown as a non-limiting example in the attached drawings wherein:

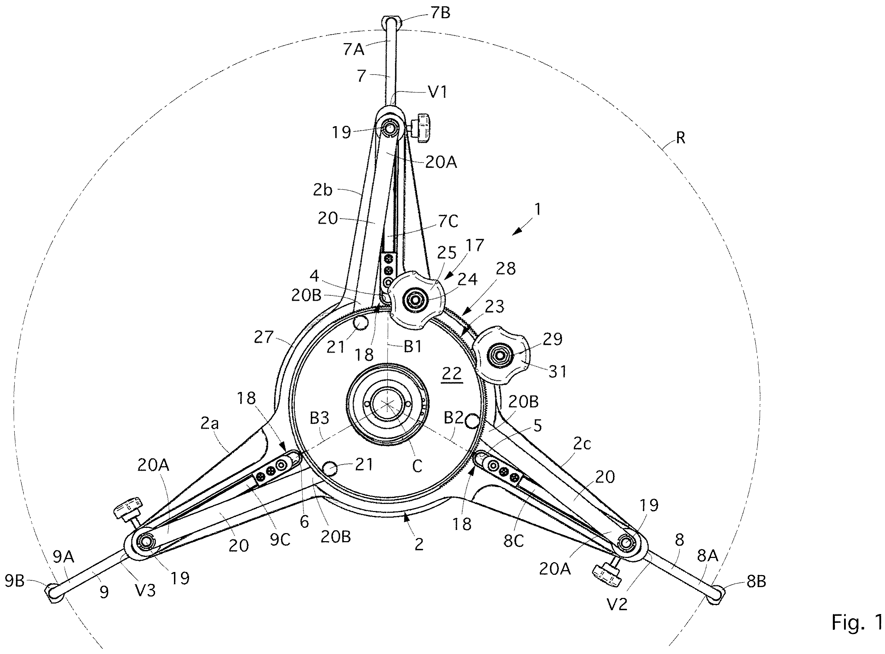

FIG. 1 is a front view of the external face of a bracket for control instruments of the alignment of wheels of vehicles, according to the invention;
FIG. 2 is a front view of the internal face of the bracket of fig. 1;
FIG. 3 is a lateral view of the bracket of fig. 1;
FIG. 4 is a slightly enlarged scale view of a part of the bracket of fig. 3;
FIG. 5 is a schematic view of the part of fig. 4, indicating the possible movements of some elements that make up the bracket of fig. 1;
FIG. 6 is a further enlarged scale view of one of the stoppers that are part of the bracket of fig. 1, extrapolated from the whole of the part of fig. 5.

### Detailed description of a preferred example embodiment

With reference to the aforementioned drawings, 1 indicates, as a whole, a bracket for control instruments of the alignment of wheels R of vehicles, hereafter bracket 1 for short.

The bracket 1 comprises a central body 2, hereafter body 2 for short, which has a perimeter preferably, but not exclusively, in the shape of a star with three arms 2a, 2b, 2c.

Usefully, the three arms 2a, 2b, 2c develop in three radial directions spaced apart angularly at 120° from each other; however, other angular dispositions are also possible, even non-symmetrical.

The body 2 is preferably made of a lightweight material, chosen, for example, from aluminum, aluminum alloys, or synthetic material with a three-dimensional structure, possibly alveolar, such as, for example, carbon or honeycomb; however, depending on specific structural needs or to contain the costs of manufacturing the bracket according to the invention, it is also possible to make the body 2 with metal/ferrous material.

The body 2 has a center indicated with C which, when mounted on the wheel R, coincides coaxially with the ideal axis of rotation of the latter, and in correspondence with which the ideal median longitudinal lines B1, B2, B3 intersect, hereafter lines B1, B2, B3 for short, along which the three arms 2a, 2b, 2c develop symmetrically.

The body 2 is strongly flattened and has a small thickness that defines two opposite and parallel flat faces, precisely one face facing outward when the bracket 1 is mounted on the wheel R, and for this reason indicated as external face 2e, and an opposite internal face 2i.

As can be seen in the drawings, coinciding with the three lines B1, B2, B3, corresponding rectilinear through slots 4, 5, 6 are made in the arms 2a, 2b, 2c, whose function will be explained in detail below.

On the side of the internal face 2i there are mounted gripping means consisting of three spikes 7, 8, 9 which extend radially toward the outside of the body 2 until they protrude from the vertices V1, V2, V3 of the arms 2a, 2b, 2c with respective distal end portions 7a, 8a, 9a.

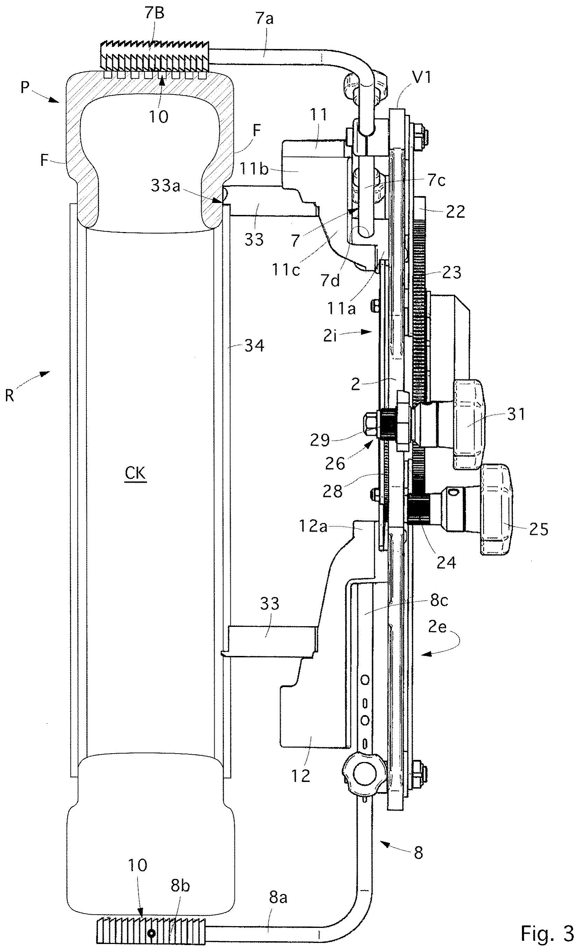

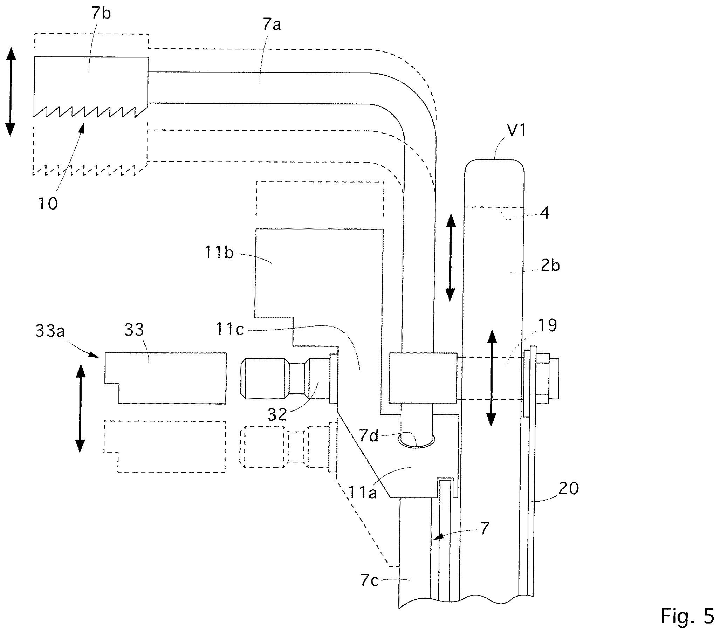

The distal portions 7a, 8a, 9a of the spikes 7, 8, 9 are bent, preferably at right angles, that is, in a direction that is substantially perpendicular to the body 2, and are equipped with terminal segments 7b, 8b, 9b, each of which outlines a raised indentation 10 (figs. 3-5).

Still on the side of the internal face 2i, there are also mounted means for resting on a shoulder F of a tire P of a wheel R, which are made in the form of three prismatic stoppers 11, 12, 13, hereafter stoppers 11, 12, 13 for short, which have equal thicknesses (fig. 3).

As can be seen in the drawings, all three spikes 7, 8, 9 are supported sliding with respect to the body 2 along its arms 2a, 2b, 2c and are driven with first driving means 17 and guided with first guide means 18.

In order to simultaneously drive the three spikes 7, 8, 9, for each arm the driving means comprise a pin 19 which is engaged transversely sliding in a respective one of the aforementioned through slots 4, 5, 6 (which together form the first guide means 18), and which constitutes an articulation hinge for an end 20a of a connecting rod 20 located on the external part 2e.

The opposite end 20B of the connecting rod 20 is instead hinged with a hinge 21 to a first disc 22 that is mounted on the external part 2e of the body 2, concentric to the center C thereof and capable of rotating.

The first disc 22 has a portion of its perimeter zone, indicatively, but not necessarily, equal to a third of a circumference, on which there is created a first toothing 23 with millimeter pitch.

A sprocket 24 engages the first toothing 23, which is supported on the body 2 with axis of rotation perpendicular thereto, which can be manually driven in bidirectional rotation by an operator by means of a knob 25 which is rotatably integral with and concentric to it.

The person of skill in the art will understand that the drive in rotation of the entire first disc 22 or of the sprocket 24 alone can take place not only manually, but also by means of an electrically powered motorized element, powered for example with one or more rechargeable batteries, or ones that can be replaced when exhausted.

Therefore, the rotation of the first disc 22 imparts a synchronized movement of the three connecting rods 20 and, consequently, of the spikes 7, 8, 9 in centripetal directions, converging toward the center C, or centrifugal directions.

The three stoppers 11, 12, 13 are also supported on the body 2 sliding in radial directions along the three arms 2a, 2b, 2c, driven with respective second driving means 26 which can be activated independently with respect to the first driving means 17 of the spikes 7, 8, 9.

In detail, the second driving means 26 comprise a second disc 27 which is keyed coaxially onto the first disc 22, but disposed on the internal face 2i of the body 2 and independently rotatable with respect thereto.

As for the first disc 22, the second disc 27 also has, on its external perimeter part, a second toothing 28, also with a millimeter pitch that can be the same as or different from the pitch of the first toothing 23.

A second sprocket 29 is engaged on the second toothing 28 and is supported rotating on the body 2 with an axis of rotation perpendicular to it, and is able to be manually driven in positive or negative rotation by an operator by means of a second knob 31 coaxial to and rotatably integral with it.

Between the stoppers 11, 12, 13 and the second disc 27 there are interposed respective second connecting and motion transmission rods, indicated with 30.

The second connecting rods 30 all have corresponding ends 30A hinged to the peripheral zone of the second disc 27, and opposite ends 30B which are each hinged to a respective stopper 11, 12, 13, typically in a zone thereof considered as base and indicated in the drawings and hereafter, for short, as respective bases 11a, 12a, 13a.

The bases 11a, 12a, 13a are made in such a way that they can slide guided on the spikes 7, 8, 9, more precisely on rectilinear segments thereof, respectively indicated with 7c, 8c, 9c, which are parallel to the internal face 2i of the body 2 and oriented converging toward the center C or diverging from it, according to an observer.

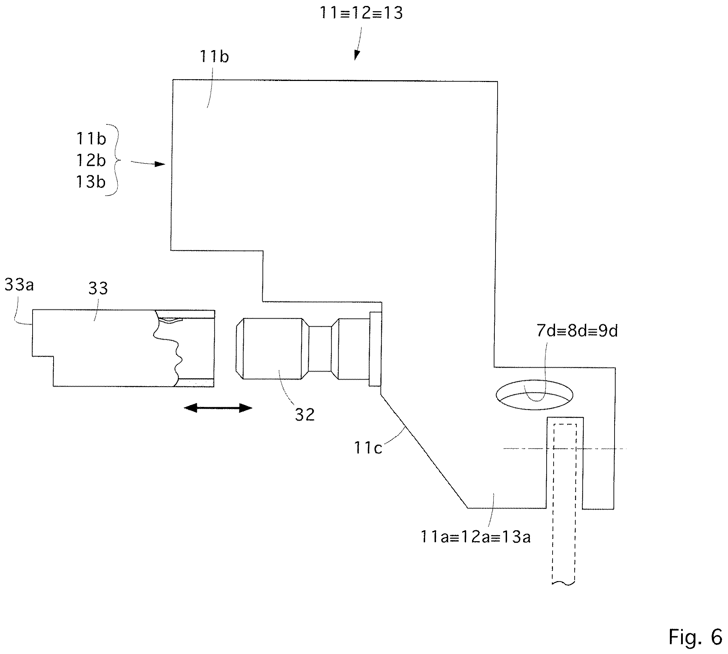

In practice, to allow each stopper to be guided, each of the bases 11a, 12a, 13a is equipped with its own through hole 7d which is shown in figs. 3, 5 and 6, referring to the base 11a of the stopper 11 due to the particular viewing angle shown in the drawings, but which is also identical in the other bases 12a and 13a.

The corresponding rectilinear segment 7c of the spike 7 is accommodated in the through hole 7d sliding and with precision, so that the stopper 11 can slide, by sliding remaining guided thereon and in a manner independent therefrom.

The same coupling between the hole 7d of the bases 12a and 13a is created in order to accommodate the respective rectilinear segments 8c and 9c of the spikes 8 and 9.

Therefore, also in this case a rotation of the second disc 27 induced by the operator through the second knob 31 produces a simultaneous movement of the stoppers 11, 12, 13 in the centripetal or centrifugal direction, so that they align with the shoulders F of the tires P of various diameters of wheels R on which the bracket 1 has to be mounted.

Each of the stoppers 11, 12, 13, in addition to the respective bases, has a contact face 11b, 12b, 13b with the shoulder F of a tire P and a portion for connection to the respective base.

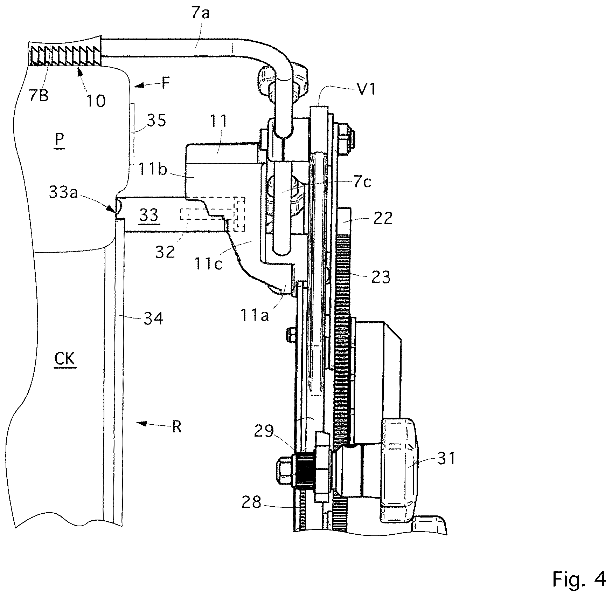

In detail, with reference to figs. 4, 5, 6, note that the stopper 11 (taken as an example - the same applies to the other stoppers 12 and 13) is formed by the base, indicated in this case with 11a, a portion for contact with a shoulder F of a tire P which defines the contact face 11b, and by a connection portion 11c that joins the contact portion to the base 11a without a break in continuity.

In particular, according to the invention, a cantilevered pin 32 extends from the connection portion 11c, which is perpendicular to the body 2 and which, when the bracket 1 is in a position of use, faces a rim CK of a wheel R.

When necessary, a sleeve 33 can be engaged on the pin 32 with precision and in a temporary and removable manner, said sleeve 33 having a length such as to extend beyond the contact face 11b when it is engaged on the pin 32.

Between the pin 32 and the sleeve 33 there are provided known removable retention means for holding the sleeve 33 when it is engaged on the pin 32, the retention means not being described in detail because they are known to the person of skill, but designed to allow the stable coupling or decoupling between them with simple pressing or manual traction movements by the operators.

As can be seen in the drawings, the sleeve 33 has a distal end 33a that outlines a special profile suitable to rest on the edge 34 of the rim CK, coupling to it in a mating manner.

When they are all engaged on the respective pins 32, the set of three sleeves 33 keeps the stoppers 11, 12, 13 deliberately detached from the shoulder F, making the bracket 1 rest overall for reference not on the latter, but on the edge 34 of the rim CK.

The use of the sleeves 33, and therefore their engagement on the respective pins 32, preferably occurs when there are embossed inscriptions on the shoulder F of a tire P, schematically indicated with 35 in fig. 4.

All the distal ends 33a resting on the edge 34 prevents imperfect resting of the portions 11a, 12a, 13a of the stoppers 11, 12, 13 on the inscriptions 35 from generating overall an imperfect positioning (for example skewed) of the bracket 1 with respect to the wheel R and, therefore, causing incorrect measurements and equally incorrect corrections of the alignment of wheels of the vehicles by the operators.

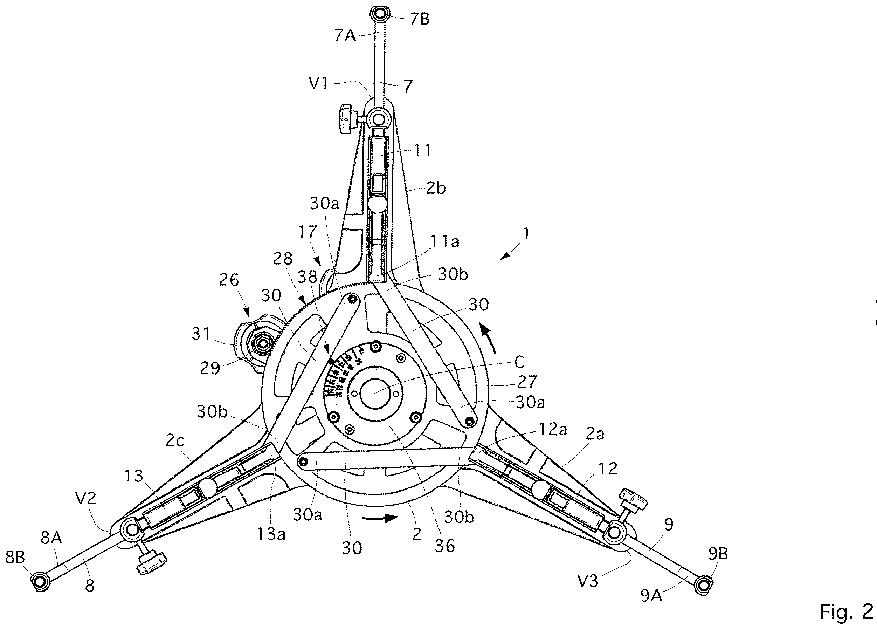

With reference to fig. 2, also note that the body 2 centrally has diameter indicator means consisting of a fixed hub 36, on which the second disc 27 is rotatably engaged and retained, and an angular numerical scale 37 which substantially corresponds to radial positions of the stoppers 11, 12, 13, and therefore also of the pins 32 and of the corresponding sleeves 33 mounted thereon, with respect to the diameters of rims CK of a standardized type. The angular numerical scale 37 is preferably expressed in inches, so as to give an immediate visual feedback to an operator.

In substantial correspondence with the angular numerical scale 37, a punctual reference index 38 is made on the second disc 27 which, together with the angular numerical scale, immediately indicates to the operator who makes the second disc 27 rotate which rim CK diameter the stoppers 11, 12, 13, that is, the pins 32 and the sleeves 33, are suitable for.

The micrometric pitch of the second toothing 28 allows the operator to make very precise adjustments, since these occur continuously and not for positions at predefined sectors. The operation of the bracket 1 for control instruments of the alignment of wheels R of vehicles according to the invention is as follows.

When an operator has to check, or correct, the alignment of a wheel "R" of a vehicle by using the known instrumentation and without disassembling it from the hub thereof to which it is attached, in the event that on the shoulder F of the tire P there are significantly embossed inscriptions 35, the operator proceeds to rest the bracket 1 on the edge 34 of the rim CK, instead of resting the stoppers 11, 12, 13 on the shoulder F.

In detail, to do this, they first engage the sleeves 33 on the corresponding pins 32, ensuring that the retention means provided between them activate in order to hold them in the correct position, engaged on the respective pins 32.

Then, looking at the radial numerical scale 37 and the corresponding punctual index 38, the operator acts on the second knob 31, rotating it in such a direction that the stoppers 11, 12, 13, or more precisely the ends 33a of the sleeves 33 supported by the stoppers, radially and precisely adapt to the diameter of the edge 34 of the rim CK they are intended to rest on, so as to prevent - during resting - a direct contact between the portions 11b, 12b, 13b of the stoppers 11, 12, 13 and the shoulder F of the tire P, thanks to their specific length which allows the ends 33a of the sleeves 33 to extend by a segment that is the same for all beyond the portions 11b, 12b, 13b of stoppers 11, 12, 13.

The rotation of the second knob 31 transmits the rotary motion to the sprocket 29 with which it is integral, which, since it is engaged on the second toothing 28 with millimeter pitch of the second disc 27, sets the second disc 27 into a controlled angular rotation.

The latter in turn transmits the motion to the stoppers 11, 12, 13 by means of the second connecting rods 30, making them slide simultaneously in radial directions, moving them centripetally to converge with each other or centrifugally to diverge from each other.

During the radial positioning of the stoppers 11, 12, 13, the bases 11a, 12a, 13a thereof are travelled through by the segments 7c, 8c, 9c of the spikes 7, 8, 9, which are engaged in the corresponding holes 7d, 8d, 9d.

In this way, the stoppers 11, 12, 13 slide along the rectilinear segments 7c, 8c, 9c, independently thereof and without their sliding interfering with them in any way whatsoever.

When the adjustment of the stoppers and of the corresponding sleeves 33 is completed, the operator proceeds to rest the bracket 1 on the edge 34 of the rim CK and acts on the first knob 25, attaching the bracket 1 onto the wheel R.

By rotating the first knob 25, the sprocket 24 integral with it imparts the particularly precise rotation to the first disc 22 by means of the engagement on the first toothing 23 thereof, which also has a millimeter pitch.

In turn, the first disc 22 drives the first connecting rods 20 which in turn move the spikes 7, 8, 9 in a radial centripetal direction until the indentations 10 of the terminal segments 7b, 8b, 9b thereof engage with the typical grooves that form the pattern of the tread of the tire P, clamping the bracket 1 on the wheel R.

The operator, after having attached the bracket 1 on the wheel R, proceeds to mount the detection and measurement instruments on the latter's hub in a known manner, and proceeds with the required readings and adjustments, without the influence of the presence of embossed inscriptions 35 on the shoulder F.

Once the intervention on the wheel R is finished, the operator acts again on the first knob 25, rotating it in the direction opposite to the previous one, causing the centrifugal and simultaneous radial movement of the spikes 7, 8, 9 and freeing the bracket 1 from the wheel, so that it can be used on another wheel.

In the event that the operator has to mount the bracket 1 on a wheel R that has a tire without embossed inscriptions on the shoulder F, before proceeding with the assembly in a known manner, they provide to remove the sleeves 33 from the respective pins 32, thus restoring the functionality of a typically known bracket.

In other words, the invention allows to have a single bracket 1, which can be used both on a wheel R with a tire P without embossed inscriptions, and also on a wheel R equipped with a tire P that has strongly embossed inscriptions on the shoulder F.

In the first case, after the operator has made the adjustments described above to adapt to the diameters of the wheels R, the stoppers 11, 12, 13 rest directly on the shoulder F in a known manner; in the second case, instead, the stoppers 11, 12, 13 are kept distanced from the shoulder F, since it is the sleeves 33 that, after being engaged on the respective pins 32, extend beyond the portions 11b, 12b, 12c and rest with their distal ends 33a directly on the edge 34 of a rim CK.

The person of skill will understand that the distal ends 33a of the sleeves 33 can have profiles that are shaped as a function of the profiles of the edges 34 of the rims CK on which they are intended to be rested, in a manner that is preferably mating.

In practice, it has been verified that the invention achieves the intended purposes.

The invention as conceived is susceptible to modifications and variants, all of which are within the scope of the inventive concept.

In their practical embodiment, any other materials, as well as shapes and sizes, can be used according to requirements, without thereby departing from the scope of protection of the following claims.

## Claims

1. A bracket (1) for control instruments of the alignment of the wheels (R) of a vehicle, which comprises:
- a body (2) from which three arms (2a, 2b, 2c) depart, each of which has a respective vertex (V1, V2, V3) and gripping means (7, 8, 9) configured to engage with said wheels (R), mounted sliding in radial directions with respect to the body (2) and angularly distanced from each other by pre-selected angles;
- first driving means (17) for driving said gripping means (7, 8, 9);
- first guide means (18) for guiding said first gripping means (7, 8, 9) between positions of grip on, or release from, a wheel (R) ;
- adjustable rest means for resting the bracket (1) in a work position in which it is parallel to a shoulder (F) of a wheel (R), said adjustable rest means comprising one or more stoppers (11, 12, 13);
- said stoppers (11, 12, 13) being mounted sliding with respect to said body (2) independently of said first gripping means (7, 8, 9), driven mobile with second driving means (27, 28, 29, 30) independent of said first driving means (17) and guided radially with said first guide means (18) ;
- said stoppers (11, 12, 13) having respective contact portions (11b, 12b, 13b) for contact with said shoulder (F) ;
**characterized in that** each of said stoppers (11, 12, 13) comprises:
- a respective cantilevered pin (32) which extends from said stoppers (11, 12, 13) toward said wheel (R);
- a respective sleeve (33), able to be temporarily and removably associated with the respective pin (32), wherein said sleeve (33) is equipped with a distal end (33a) extending beyond said contact ends (11b, 12b, 13b) in order to rest on the edges (34) of rims (CK) of said wheels (R).

2. The bracket as in claim 1, wherein said central body (2) is made of a light material selected from a synthetic material, a material that has a three-dimensional honeycomb structure, aluminum, aluminum alloys.

3. The bracket as in claim 1, wherein said stoppers (11, 12, 13) have:
- the same thicknesses as each other;
- respective base portions (11a, 12a, 13a);
- respective contact portions (11b, 12b, 13b) for contact with a shoulder (F) of said wheel (R); and
- respective connecting portions (11c, 12c, 13c) for connection between said base portions (11a, 12a, 13a) and said contact portions (11b, 12b, 13b).

4. The bracket as in claim 1, wherein said first gripping means comprise respective spikes (7, 8, 9) which define respective distal portions (7a, 8a, 9a) which shape respective terminal segments (7b, 8b, 9b) for contact with a tire (P) of a wheel (R).

5. The bracket as in claim 4, wherein said terminal segments (7b, 8b, 9b) are equipped with raised indentations (10) for engagement in grooves of a tread of a tire (P).

6. The bracket as in claim 4 or 5, wherein said first driving means (17) comprise:
- a first central disk (22) which is supported rotating concentrically with respect to said body (2);
- a set of three first connecting rods (20) for connection between the first central disk (22) and the respective spikes (7, 8, 9), each connecting rod (20) having its ends (20A, 20B) hinged to said spikes (7, 8, 9) and to said first disc (22), respectively;
- a first perimeter toothing (23) with millimeter pitch created in a perimeter part of said first central disc (22); and
- a maneuvering sprocket (24) which is rotatably supported by said central body (2) and engaged in said first perimeter toothing (23), intended to be driven manually in order to rotate said first central disc (22).

7. The bracket as in claim 6, wherein said second driving means comprise:
- a second disk (27) mounted rotating on said body (2), coaxial to said first disk (22), and rotationally independent thereof;
- a second toothing (28) with millimeter pitch created in a perimeter part of said second central disc (27);
- a set of three second connecting rods (30) which have respective first ends (30A) hinged to said second disc (27) and second opposite ends (30B) each hinged to a respective stopper (11, 12, 13);
- a second sprocket (29) supported rotating to said first sprocket (24) and engaged in said second toothing (28).

8. The bracket as in claim 6 or 7, wherein said first guide means (18) comprise:
- a set of three rectilinear slots (4, 5, 6) which are made through each one in a respective arm (2a, 2b, 2c);
- pins (19) engaged transversely sliding in said slots (4, 5, 6) and associated with said set of three first connecting rods (20);
- second trolleys (30) engaged sliding in said slots (4, 5, 6) and associated with corresponding ends (20A) of said set of three first connecting rods (20).

9. The bracket as in claim 7 or 8, when dependent on claim 7, wherein between a fixed hub (36) of said body (2) and said second disk (27) there are interposed means (37, 38) for indicating the pre-selection of diameters.

10. The bracket as in any claim hereinbefore, wherein said pre-selected angles are angles of 120°.

## Patentansprüche

1. Halterung (1) für Kontrollinstrumente der Ausrichtung der Räder (R) eines Fahrzeugs, die umfasst:
- einen Körper (2), von dem drei Arme (2a, 2b, 2c) ausgehen, von denen jeder einen jeweiligen Scheitelpunkt (VI, V2, V3) und Greifmittel (7, 8, 9) aufweist, die so konfiguriert sind, dass sie mit den besagten Rädern (R) in Eingriff kommen, die in Bezug auf den Körper (2) in radialen Richtungen gleitend montiert sind und voneinander um vorgewählte Winkel winkelmäßig beabstandet sind;
- erste Antriebsmittel (17) zum Antreiben der besagten Greifmittel (V, 8, 9);
- erste Führungsmittel (18) zum Führen der besagten ersten Greifmittel (7, 8, 9) zwischen Positionen des Greifens an oder des Lösens von einem Rad (R);
- einstellbare Auflagemittel zum Auflegen der Halterung (1) in einer Arbeitsposition, in der sie parallel zu einer Schulter (F) eines Rades (R) ist, wobei die besagten einstellbaren Auflagemittel einen oder mehrere Anschläge (11, 12, 13) umfassen;
- wobei die besagten Anschläge (11, 12, 13), die in Bezug auf den besagten Körper (2) unabhängig von den besagten ersten Greifmitteln (7, 8, 9) gleitend montiert sind, mit zweiten Antriebsmitteln (27, 28, 29, 30) unabhängig von den besagten ersten Antriebsmitteln (17) beweglich angetrieben werden und mit den besagten ersten Führungsmitteln (18) radial geführt werden;
- wobei die besagten Anschläge (11, 12, 13) jeweilige Kontaktabschnitte (11b, 12b, 13b) für den Kontakt mit der besagten Schulter (F) aufweisen;
**dadurch gekennzeichnet, dass** jeder der besagten Anschläge (11, 12, 13) umfasst:
- einen jeweiligen freitragenden Stift (32), der sich von den besagten Anschlägen (11, 12, 13) zum besagten Rad (R) hin erstreckt;
- eine jeweilige Hülse (33), die imstande ist, vorübergehend und auf lösbare Weise mit dem jeweiligen Stift (32) verbunden zu werden, worin die besagte Hülse (33) mit einem distalen Ende (33a) ausgestattet ist, das sich über die besagten Kontaktenden (11b, 12b, 13b) hinaus erstreckt, um auf den Kanten (34) der Felgen (CK) der besagten Räder (R) aufzuliegen.

2. Halterung nach Anspruch 1, worin der besagte zentrale Körper (2) aus einem leichten Material besteht, das aus einem synthetischen Material, einem Material, das ein dreidimensionale Wabenstruktur aufweist, Aluminium oder Aluminiumlegierungen ausgewählt ist.

3. Halterung nach Anspruch 1, worin die besagten Anschläge (11, 12, 13) aufweisen:
- die gleiche Dicke wie die jeweils anderen;
- jeweilige Basisabschnitte (11a, 12a, 13a);
- jeweilige Kontaktabschnitte (11b, 12b, 13b) für den Kontakt mit einer Schulter (F) des besagten Rades (R); und
- jeweilige Verbindungsabschnitte (11c, 12c, 13c) für die Verbindung zwischen den besagten Basisabschnitten (11a, 12a, 13a) und den besagten Kontaktabschnitten (11b, 12b, 13b).

4. Halterung nach Anspruch 1, worin die besagten ersten Greifmittel jeweilige Dornen (7, 8, 9) umfassen, die jeweilige distale Abschnitte (7a, 8a, 9a) definieren, die jeweilige Endsegmente (7b, 8b, 9b) für den Kontakt mit einem Reifen (P) eines Rades (R) bilden.

5. Halterung nach Anspruch 4, worin die besagten Endsegmente (7b, 8b, 9b) mit erhöhten Einkerbungen (10) zum Eingriff in Rillen einer Lauffläche eines Reifens (P) ausgestattet sind.

6. Halterung nach Anspruch 4 oder 5, worin die besagten ersten Antriebsmittel (17) umfassen:
- eine erste zentrale Scheibe (22), die in Bezug auf den besagten Körper (2) konzentrisch drehbar gelagert ist;
- einen Satz von drei ersten Verbindungsstangen (20) zur Verbindung zwischen der ersten zentralen Scheibe (22) und den jeweiligen Dornen (7, 8, 9), wobei jede Verbindungsstange (20) mit ihren Enden (20A, 20B) an den besagten Dornen (7, 8, 9) und an der besagten ersten Scheibe (22) angelenkt ist;
- eine erste Umfangsverzahnung (23) mit Millimeterabstand, die in einem Umfangsteil der besagten ersten zentralen Scheibe (22) erzeugt wird; und
- ein Bewegungszahnrad (24), das durch den besagten zentralen Körper (2) drehbar gelagert ist und in die besagte erste Umfangsverzahnung (23) eingreift, die dazu bestimmt ist, manuell angetrieben zu werden, um die besagte erste zentrale Scheibe (22) zu drehen.

7. Halterung nach Anspruch 6, worin die besagten zweiten Antriebsmittel umfassen:
- eine zweite Scheibe (27), die drehbar auf dem besagten Körper (2), koaxial zu der besagten ersten Scheibe (22) montiert ist und drehunabhängig davon ist;
- eine zweite Verzahnung (28) mit Millimeterabstand, die in einem Umfangsteil der besagten zweiten zentralen Scheibe (27) erzeugt wird;
- einen Satz von drei zweiten Verbindungsstangen (30), die jeweils erste Enden (30A), die an der besagten zweiten Scheibe (27) angelenkt sind, und zweite gegenüberliegende Enden (30B), von denen jedes an einem jeweiligen Anschlag (11, 12, 13) angelenkt ist, aufweisen;
- ein zweites Zahnrad (29), das drehbar an dem besagten ersten Zahnrad (24) gelagert ist und in die besagte zweite Verzahnung (28) eingreift.

8. Halterung nach Anspruch 6 oder 7, worin die besagten ersten Führungsmittel (18) umfassen:
- einen Satz von drei geradlinigen Schlitzen (4, 5, 6), die jeder durch einen jeweiligen Arm (2a, 2b, 2c) hergestellt sind;
- Stifte (19), die quer gleitend in die besagten Schlitze (4, 5, 6) eingreifen und mit dem besagten Satz von drei ersten Verbindungsstangen (20) verbunden sind;
- zweite Laufkatzen (30), die gleitend in die besagten Schlitze (4, 5, 6) eingreifen und mit den entsprechenden Enden (20A) des besagten Satzes von drei ersten Verbindungsstangen (20) verbunden sind.

9. Halterung nach Anspruch 7 oder 8, wenn abhängig von Anspruch 7, worin zwischen einer festen Nabe (36) des besagten Körpers (2) und der besagten zweiten Scheibe (27) Mittel (37, 38) zum Anzeigen der Vorauswahl von Durchmessern angeordnet sind.

10. Halterung nach irgendeinem der vorstehenden Ansprüche, worin die besagten vorgewählten Winkel Winkel von 120° sind.

## Revendications

1. Support (1) pour instruments de commande de l'alignement des roues (R) d'un véhicule, comprenant :
- un corps (2) d'où partent trois bras (2a, 2b, 2c), chacun d'entre eux ayant un sommet respectif (V1, V2, V3) et des moyens de préhension (7, 8, 9) configurés pour s'engager avec lesdites roues (R), montés pour coulisser dans des directions radiales par rapport au corps (2) et angulairement éloignés l'un de l'autre par des angles présélectionnés ;
- des premiers moyens d'entraînement (17) pour l'entraînement desdits moyens de préhension (7, 8, 9) ;
- des premiers moyens de guidage (18) pour guider lesdits premiers moyens de préhension (7, 8, 9) entre les positions de préhension sur une roue (R) ou de relâchement de celle-ci ;
- des moyens d'appui réglables pour maintenir le support (1) en appui dans une position de travail dans laquelle il est parallèle à un épaulement (F) d'une roue (R), lesdits moyens d'appui réglables comprenant une ou plusieurs butées (11, 12, 13) ;
- lesdites butées (11, 12, 13) étant montées pour coulisser par rapport audit corps (2) indépendamment desdits premiers moyens de préhension (7, 8, 9), entraînés en mouvement par des deuxièmes moyens d'entraînement (27, 28, 29, 30) indépendants desdits premiers moyens d'entraînement (17) et guidés radialement par lesdits premiers moyens de guidage (18) ;
- lesdites butées (11, 12, 13) ayant des portions de contact respectives (11b, 12b, 13b) pour le contact avec ledit épaulement (F) ;
**caractérisé en ce que** chacune desdites butées (11, 12, 13) comprend :
- une goupille en porte-à-faux (32) respective qui s'étend desdites butées (11, 12, 13) vers ladite roue (R) ;
- un manchon respectif (33), pouvant être associé de manière temporaire et amovible à la goupille (32) respective, dans lequel ledit manchon (33) est doté d'une extrémité distale (33a) s'étendant au-delà desdites extrémités de contact (11b, 12b, 13b) afin de venir en appui sur les bords (34) des jantes (CK) desdites roues (R).

2. Support selon la revendication 1, dans lequel ledit corps central (2) est constitué d'un matériau léger choisi parmi un matériau synthétique, un matériau qui a une structure tridimensionnelle en nid d'abeille, de l'aluminium, des alliages d'aluminium.

3. Support selon la revendication 1, dans lequel lesdites butées (11, 12, 13) ont :
- les mêmes épaisseurs les unes que les autres ;
- des portions de base (11a, 12a, 13a) respectives ;
- des portions de contact (11b, 12b, 13b) respectives pour le contact avec un épaulement (F) de ladite roue (R) ; et
- des portions de liaison (11c, 12c, 13c) respectives pour la connexion entre lesdites portions de base (11a, 12a, 13a) et lesdites portions de contact (11b, 12b, 13b).

4. Support selon la revendication 1, dans lequel lesdits premiers moyens de préhension comprennent des pointes respectives (7, 8, 9) qui définissent les parties distales (7a, 8a, 9a) respectives qui forment les segments terminaux (7b, 8b, 9b) respectifs pour le contact avec un pneu (P) d'une roue (R).

5. Support selon la revendication 4, dans lequel lesdits segments terminaux (7b, 8b, 9b) sont dotés d'indentations en relief (10) pour l'engagement dans les rainures d'une bande de roulement d'un pneu (P).

6. Support selon la revendication 4 ou 5, dans lequel lesdits premiers moyens d'entraînement (17) comprennent :
- un premier disque central (22) supporté en rotation concentrique par rapport audit corps (2) ;
- un ensemble de trois premières bielles de connexion (20) pour la liaison entre le premier disque central (22) et les pointes respectives (7, 8, 9), chaque bielle de connexion (20) ayant ses extrémités (20A, 20B) articulées auxdites pointes (7, 8, 9) et audit premier disque (22), respectivement ;
- une première denture périmétrique (23) à pas millimétrique créée dans une partie périmétrique dudit premier disque central (22) ; et
- un pignon de manœuvre (24) soutenu en rotation par ledit corps central (2) et engagé dans ladite première denture périmétrique (23), destiné à être entraîné manuellement afin de faire tourner ledit premier disque central (22).

7. Support selon la revendication 6, dans lequel lesdits deuxièmes moyens d'entraînement comprennent :
- un deuxième disque (27) monté en rotation sur ledit corps (2), coaxial audit premier disque (22), et indépendant en rotation de celui-ci ;
- une deuxième denture (28) à pas millimétrique créée dans une partie périmétrique dudit deuxième disque central (27) ;
- un ensemble de trois deuxièmes bielles de connexion (30) qui ont des premières extrémités (30A) respectives articulées audit deuxième disque (27) et des deuxièmes extrémités opposées (30B) chacune articulée à une butée respective (11, 12, 13) ;
- un deuxième pignon (29) supporté en rotation sur ledit premier pignon (24) et engagé dans ladite deuxième denture (28).

8. Support selon la revendication 6 ou 7, dans lequel lesdits premiers moyens de guidage (18) comprennent :
- un ensemble de trois fentes rectilignes (4, 5, 6) qui sont réalisées à travers chacune dans un bras respectif(2a, 2b, 2c) ;
- des goupilles (19) engagées transversalement coulissant dans lesdites fentes (4, 5, 6) et associées audit ensemble de trois premières bielles de connexion (20) ;
- des deuxièmes chariots (30) engagés pour coulisser dans lesdites fentes (4, 5, 6) et associés aux extrémités correspondantes (20A) dudit ensemble de trois premières bielles de connexion (20).

9. Support selon la revendication 7 ou 8, lorsqu'elle dépend de la revendication 7, dans lequel entre un moyeu fixe (36) dudit corps (2) et ledit deuxième disque (27) se trouvent des moyens interposés (37, 38) pour indiquer la présélection des diamètres.

10. Support selon l'une quelconque des revendications précédentes, dans lequel lesdits angles présélectionnés sont des angles de 120°.
